Europäisches Patentamt

European Patent Office

Office européen des brevets

(19)

(11) Veröffentlichungsnummer: **0 101 792**
**B1**

(12) # EUROPÄISCHE PATENTSCHRIFT

(45) Veröffentlichungstag der Patentschrift:
02.11.88

(21) Anmeldenummer: 83104704.8

(22) Anmeldetag: 13.05.83

(51) Int. Cl.⁴: **F 16 J 15/16,** H 01 H 33/56,
F 16 J 15/50

(54) **Dichtung für eine Antriebsstange.**

(30) Priorität: 21.07.82 DE 3227228

(43) Veröffentlichungstag der Anmeldung:
07.03.84 Patentblatt 84/10

(45) Bekanntmachung des Hinweises auf die Patenterteilung:
02.11.88 Patentblatt 88/44

(84) Benannte Vertragsstaaten:
CH FR GB LI SE

(56) Entgegenhaltungen:
DE-A-2 824 901
DE-B-1 008 070
FR-A-560 670

(73) Patentinhaber: Licentia Patent- Verwaltungs- GmbH,
Theodor- Stern- Kai 1, D-6000 Frankfurt/Main 70
(DE)

(72) Erfinder: Hoffmann, Dietrich, Auf der Schubach
63, D-3500 Kassel- Kirchditmold (DE)

(74) Vertreter: Lertes, Kurt, Dr., Licentia Patent-
Verwaltungs- GmbH Theodor- Stern- Kai 1, D-6000
Frankfurt/M 70 (DE)

EP 0 101 792 B1

## Beschreibung

Die erfindung betrifft eine Dichtung für eine Antriebsstange gemäß dem Oberbegriff des Hauptanspruches.

Derartige Stangendichtungen sind normalerweise am unteren Ende einen Porzellanstützers (Polsäule) eines Hochspannungs-Leistungsschalters angeordnet. Die Dichtung hat die Aufgabe, die in Inneren des Stützers liegende Antriebsstange zu führen und den Innenraum des Stützers, der mit SF$_6$-Druckgas gefüllt ist, gegenüber der Außenluft abzudichten. Die Anforderungen an die Dichtigkeit sind extrem hoch, da der Gasverlust pro Jahr nur venige Gramm betragen darf.

Es sind auch schon Stangendichtungen bekannt (DE-A-2 315 732, DE-A-2 701 592), die diesen hohen Anforderungen an die Dichtigkeit entsprechen. Bei diesen bekannten Dichtungen besteht jedoch die Gefahr, daß die Dichtungsringe infolge hoher Schalthäufigkeit oder durch Korrosionseinflüsse beschädigt werden können. In diesem Falle kann es zu einem langsamen Gasverlust kommen. Diese Störung kann nur durch Stillegung der Polsäule und Ausbau des Dichtungselementes behoben werden.

Es ist auch schon eine Stangendichtung vorgeschlagen worden (DE-A-2 824 901), bei der zusätzlich zur Hauptdichtung eine aus einem Führungsring und einem Dichtungsring bestehende Notdichtung vorgesehen ist, die im Normalzustand ohne Pressung und Dichtfunktion ist und im Störungsfall durch eine Mutter zusammenpreßbar ist. Die Dichtungs- und Führungselemente für die Antriebsstange sind hierbei in eine besondere Hülse verlegt, die konzentrisch im Flansch angeordnet ist. Diese Hülse nimmt auch die Notdichtung und die zur Pressung notwendige Mutter auf. Wenn diese Stangendichtung auch eine erhebliche Verbesserung der eingangs erwähnten und bekannten Stangendichtungen mit sich bringt, so ist der technische Aufwand vergleichsweise hoch.

Der Erfindung liegt daher die Aufgabe zugrunde, eine Stangendichtung der genannten Art dadurch zu verbessern, daß ihre Notdichtung mit einfachen Mitteln zu Wirkung gebracht werden kann.

Diese Aufgabe wird erfindungsgemäß durch die im Kennzeichen des Hauptanspruches angegebenen Merkmale gelöst. Die Stangendichtung nach der Erfindung sowie die Mittel zur Betätigung der Notdichtung sind technisch einfach. Gemäß einer Weiterbildung der Erfindung ist jederzeit erkennbar, ob und bis zu welchem Pressungsgrad die Notdichtung zum Einsatz gelangt ist.

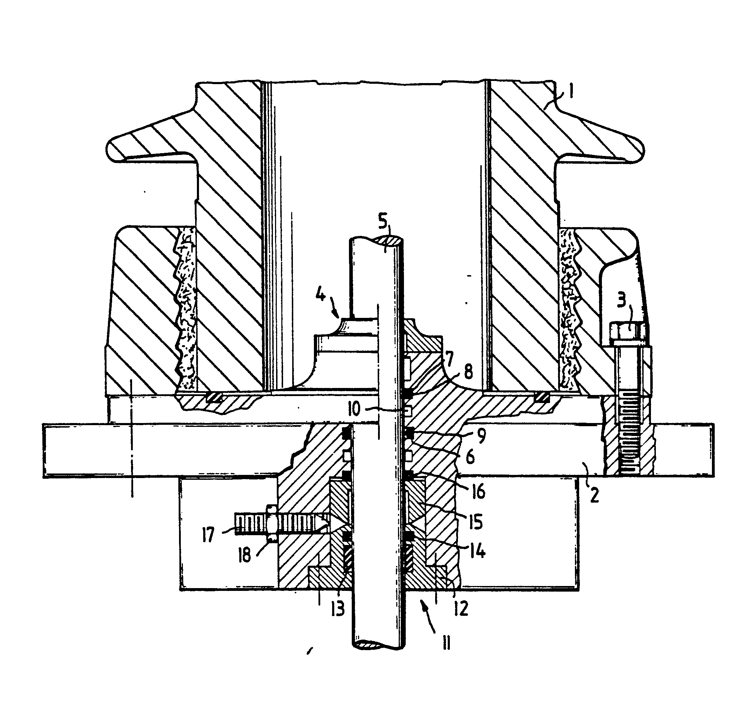

In der Zeichnung ist ein Ausführungsbeispiel nach der Erfindung dargestellt.

Mit dem unteren Ende eines Porzellanisolators 1 ist ein Flansch 2 mittels Schrauben 3 verbunden, der die Stangendichtung 4 enthält.

Durch die Stangendichtung tritt die Antriebsstange 5 hindurch, die innerhalb des Isolators 1 mit einer nicht dargestellten Betätigungsstange aus Isolierstoff und unterhalb der Stangendichtung mit der Kolbenstange eines z. B. pneumatischen oder hydraulischen Antriebes (nicht dargestellt) verbunden ist. Die Innenfläche der Stangendichtung weist eine Reihe von Ringnuten auf, von denen die Ringnuten 6 und 7 O-Ringe 8 und 9 für die Hauptdichtung aufnehmen. Die Ringnut 10 kann weiterhin über einen nicht gezeichneten Kanal von außen mit einem Gasprüfgerät verbunden werden, mit dem festgestellt werden kann, ob der Dichtungsring 8 noch ausreichend dicht auf der Antriebsstange 5 sitzt.

Die Notdichtung besteht aus einem zweigeteilten Konusring 11, der in eine Aussparung des Flansches 2 eingesetzt und dessen unterer Teil 12 an ihm befestigt ist. Der feste Ring 12 weist einen Führungsring 13 und einen O-Ring 14 auf. Der obere Konusring 15, der die Antriebsstange 5 lose umfaßt, wirkt mit seiner oberen Fläche mit einem weiteren O-Ring 16 zusammen. In Höhe der Teilungsfuge der beiden Konusringe 12 und 15 greift senkrecht zur Achse der Antriebsstange eine Stellschraube 17 ein. Dazu ist die Trennfuge durch eine Bohrung nach außen erweitert, in die die Spitze der Stellschraube eindrehbar ist. Die Stellschraube 17 kann durch eine Kontermutter 18 in ihrer Stellung fixiert werden.

Im Falle eines Gasvelustes, der durch das Versagen der Hauptdichtung 8 und 9 verursacht wird, wird die Kontermutter 18 der Stellschraube 17 gelöst und diese in den Flansch hineingedreht. Ihre Spitze verschiebt dabei den oberen Konusring 15 axial in Richtung des O-Ringes 16 und preßt diesen in die Ringnut und damit gegen die Antriebsstange 5. Durch eine Markierung an der Stellschraube kann festgestellt werden, wie weit diese in den Flansch hineingedreht und wie stark die Pressung des O-Ringes 16 vorgenommen wurde. Nach diesem Arbeitsgang wird die Kontermutter 18 wieder angezogen und damit die Lage der Stellschraube 17 gesichert.

## Patentansprüche

1. Dichtung für eine Antriebsstange (5), die aus einem unter Atmosphärendruck stehenden Raum in einem mit SF$_6$-Druckgas gefüllten Isolator führt und in einem äußeren an dem Isolator befestigten Flansch (2) geführt ist, wobei der die Antriebsstange umgebende Flanschteil an seiner Innenfläche mit Dichtungsringen und Führungsringen (13) versehen ist und wobei zusätzlich zur Hauptdichtung eine Notdichtung vorgesehen ist, die bei einem Defekt der Hauptdichtung durch einen von außen axial verschiebbaren Ring zusamnengepreßt werden kann,

dadurch gekennzeichnet, daß der Ring als Konusring (15) ausgebildet ist und daß zur Verschiebung des Konusringes eine angespitzte an der Konusfläche angreifende Stellschraube (17) radial im Flanschteil angeordnet ist.

2. Dichtung nach Anspruch 1,
dadurch gekennzeichnet,
daß die Notdichtung einen O-Ring aufweist.

2. Dichtung nach Anspruch 1,
dadurch gekennzeichnet,
daß die Stellschraube eine Kontermutter (18) zur Verhinderung einer Stellungsänderung aufweist.

4. Dichtung nach Anspruch 1,
dadurch gekennzeichnet,
daß Markierungen an der Stellschraube angebracht sind, die die Inbetriebnahme der Notdichtung erkennen lassen.

## Claims

1. Seal for a driving rod (5), which leads from a space standing under atmospheric pressure into an isolator filled with pressurised $SF_6$ gas and is led into an outer flange (2) fastened at the isolator, wherein the flange part surrounding the driving rod is provided at its inward surface with sealing rings and guide rings (13) and wherein, in addition to the main seal, an emergency seal is provided, which in the case of a defect of the main seal can be compressed by a ring which is axially displaceable from outside, characterised thereby, that the ring is formed as cone ring (15) and that a pointed set screw (17), which engages at the conical surface, is radially arranged in the flange part for the displacement of the cone ring.

2. Seal according to claim 1, characterised thereby, that the emergency seal displays an O-ring.

3. Seal according to claim 1, characterised thereby, that the set screw displays a lock nut (18) for the prevention of a change in setting.

4. Seal according to claim 1, characterised thereby, that markings, which allow the putting into operation of the emergency seal to be recognised, are applied at the set screw.

## Revendications

1. Dispositif d'étanchéité d'une tige de commande (5) qui va d'un espace à la pression atmosphérique à un isolateur rempli de gaz $SF_6$ sous pression, et passe dans une bride (2) extérieure fixée sur l'isolateur, la partie de bride entourant la tige de commande étant pourvue sur sa face interne de joints d'étanchéité et de bagues de guidage (13) et un dispositif d'étanchéité de secours étant prévu en plus du dispositif d'étanchéité principal, lequel dispositif de secours peut être pressé, en cas de défaillance du dispositif d'étanchéité principal, par un joint se déplaçant axialement de l'extérieur, caractérisé en ce que le joint est un anneau conique (15) et en ce que pour déplacer l'anneau conique, une vis de réglage (17), agissant sur la surface conique, est disposée radialement dans la partie de bride.

2. Dispositif d'étanchéité selon la revendication 1, caractérisé en ce que le dispositif d'étanchéité de secours présente un joint torique.

3. Dispositif d'étanchéité selon la revendication 1, caractérisé en ce que la vis de réglage présente un contre-écrou (18) destiné à empêcher un changement de position.

4. Dispositif d'étanchéité selon la revendication 1, caractérisé en ce que des repères sont portés sur la vis de réglage qui permettent de constater l'entrée en service du dispositif d'étanchéité de secours.